# EUROPEAN PATENT SPECIFICATION

(11) **EP 2 388 213 B1**
(45) Date of publication and mention of the grant of the patent: **25.02.2015**
(21) Application number: 10388006.8
(22) Date of filing: 20.05.2010
(51) Int. Cl.: B65G 1/127

(54) **A system for the storage and sorting of mats**
System zur Lagerung und Sortierung von Matten
Système pour le stockage et le tri de tapis

(43) Date of publication of application: 23.11.2011
(73) Proprietor: Catmaca ApS, 4130 Viby Sjælland (DK)
(72) Inventor: Rugtved, Ole, 3500 Vaerloese (DK)
(74) Representative: Larsen, Hans Ole

(56) References cited:
- WO-A1-02/02444
- DE-A1- 2 013 005
- DE-A1- 4 432 056
- DE-C1- 4 027 874
- DE-U1-202004 019 243
- NL-A- 9 000 863
- US-A- 4 142 626

## Description

### Technical field

The present invention relates to a system for sorting and storing objects, such as mats, according to the preamble of claim 1. Such a system is known from DE-A-2013005.

The invention also relates to a method of sorting and storing objects, such as mats.

### The prior art

When received at industrial laundries, the received mats and towels are subjected to a number of various processes to remove all undesired particles. First, all solid particles, such as sand, pebbles and the like are removed from the mats. Then, the mats are washed, centrifuged and dried. Such a washing process for mats is described in WO 2009/155429 A1.

After wash, centrifugation and drying, the towels are rolled up, and, if necessary, they are ironed during the rolling. The towels are sorted in connection with the rolling, following which they are transported out for storage. The mats are rolled or folded up, and, if necessary, they are oiled. Then, the mats are transported out for storage and sorting.

Accordingly, at the laundries there is a great need for storing and sorting mats and towels after the washing process.

Previously, the mats have been stored in that they have been folded up and placed on pallet racks or in special carriages. Another way of storing the mats has been to roll them up, following which they have been placed in pipes of 250 - 300 mm, preferably plastics pipes. The pipes are arranged in pallet racks, so that the lowermost pipes are placed on the floor, while the uppermost pipes are placed between 2200 and 2500 mm above the height of the floor, This has resulted in a great strain on the operators because of the great difference in height in the rack system and very uniform working routines.

If the present rack system was to comply with the guidelines and working height requirements for the operators laid down by the working environment service, the storage capacity of these racks would be reduced by 50%.

US 2006/0083888 A1 describes a system of handling, organizing and storing mats and comprising a loading station which applies a clip to the mat, and an elevator which moves the mats from the loading station and up to a plurality of conveyor belts, which move the mats to the primary conveyor belt on which the mats are stored. The system has the drawback that the system is bulky, and that the mats may be entered and removed only via the loading station.

However, no storage and sorting system for rolled mats is available, which is compact and has a high storage capacity, and which also improves the working environment for the operators.

### The object of the invention

The present invention remedies the problems of the most immediate prior art by providing a system for sorting and storing objects, such as mats, as defined in claim 1.

According to claim 2, each storage system comprises at least one removing unit having a movable element, such as a pawl, which may be brought into contact with at least the one end plate of the cradle, and the cradle is tilted by moving the cradle forwards, whereby the object may be moved into the seat in the elevator system.

According to claim 3, the storage system comprises at least one sensor or detector disposed above the cradles and intended to record one or more reflected signals, such as reflected light, from a reflecting material disposed at the bottom of the cradle, or at least one wireless reading unit disposed near the cradles and intended to communicate with at least one identification unit disposed on the cradle. Hereby, it may be recorded whether a cradle is empty, and whether an object is disposed in the seat.

The present invention also provides a method of sorting and storing objects, such as mats, as defined in claim 4.

According to claim 5, the storage system comprises a removing unit having a movable element, such as a pawl, which is brought into contact with at least the one end plate of the cradle, said cradle being tilted by moving the cradle forwards. Hereby, the cradle may be tilted, whereby the object may be passed into the seat in the elevator system.

The controller records whether a cradle is empty or not by means of at least one sensor or detector disposed above the cradles, or the controller records the positions of the cradles by means of at least one wireless reading unit, which is disposed near the cradles and communicates with at least one wireless identification unit on the cradle, according to claim 6. Hereby, it may be recorded whether a cradle is empty, and whether an object is disposed in the seat.

### The drawing

Exemplary embodiments of the invention will be explained more fully below with reference to the drawing, in which
- fig. 1: shows an embodiment of the invention,
- fig. 2: shows the embodiment of fig. 1, seen from the side,
- fig. 3a: shows the elevator system shown in figure 1,
- fig. 3b: shows an embodiment of the elevator system shown in figure 3a,
- fig.4: shows an embodiment which is not part of the invention, and
- fig. 4b: shows the embodiment of figure 4a, seen from the side.

### Description of the exemplary embodiments

In the description below, the term "object" defines mats, towels, cloths, bed linen, posters and other printed matter which may be stored and sorted by means of the invention described.

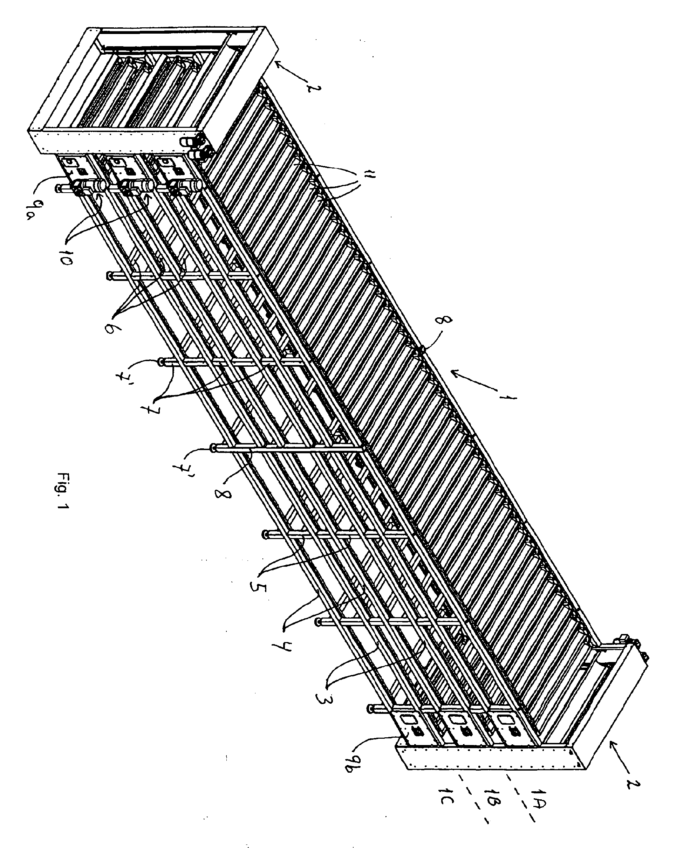

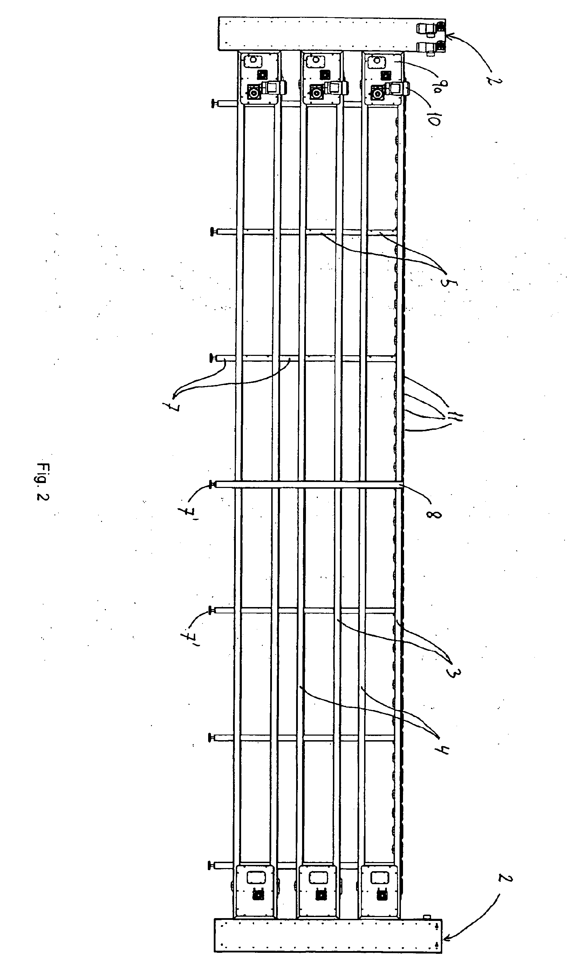

Figures 1 - 2 show an embodiment of the invention which provides a storage system 1 for storing and sorting objects. The storage system 1 comprises one or more tiers for storing the objects which are constructed as an essentially horizontally disposed paternoster system. The objects are sorted and arranged on each tier via an elevator system 2 disposed at the end of the tiers.

The tier structure may comprise two lateral frames which are connected with each other, and between which the paternoster system is mounted. Each lateral frame may comprise at least one upper rod 3 and at least one lower rod 4 connected with each other via at least two spacers 5. Alternatively, the upper rod 3 and/or the lower rod 4 may consist of two or more rods disposed in extension of each other. The spacers 5 may be disposed near both ends of the rods and/or be disposed with a suitable distance between the ends, as shown in figure 1. One or more transverse rods 6 may connect at least one spacer 5 in the one lateral frame with at least one spacer 5 in the other lateral frame. In a preferred embodiment, each transverse rod 6 is connected with two spacers 5 which are disposed opposite each other.

The tiers may be constructed as modules 1A, 1B, 1C (shown in dashed lines), where each tier may be constructed in the same manner and may be disposed on top of each other to achieve the desired storage capacity. The tiers 1A, 1B, 1C may be interconnected via at least two other spacers 7. The spacers 7 may be disposed near both ends of the tier structures and/or be disposed with a suitable distance between the ends, as shown in figures 1 - 2. The one end of the spacer 7 may be connected with the lower rod 4 in the same manner as the first spacer 5. The other end may be configured as a first pin portion intended to engage a second pin portion, which may be disposed on the upper rod 3 on the tier structure below, or a foot 7'. This provides a compact storage system of great storage capacity which occupies as little space as possible. Moreover, it is possible to vary the number of tiers in the storage system relative to the desired storage capacity.

Alternatively, each tier 1A, 1B, 1C may comprise one or more sections which are disposed in extension of each other, and which may be interconnected via at least one vertical rod B. The rods 8 may be connected with each other via at least one transverse rod 6. In a preferred embodiment, the rods 8 are connected with each tier, and each tier 1A, 1B, 1C comprises two sections which are interconnected via the rods 8, as shown in figures 1 - 2. Hereby, it is possible to vary the storage capacity of the tiers in the storage system.

The spacers 5 and/or the rods 3, 4, 6, 8 may be secured to each other by means of welding, soldering, gluing or a similar process. Alternatively, the spacers 5 and/or the rods 3, 4, 6, 8 may be secured to each other by means of known fastening elements, such as bolts, screws and rivets.

The rods 3, 4, 6, 8 and the spacers 5, 7 may be made of metal, technical plastics, wood or another material suitable for the purpose and be either hollow or solid. Further, the rods 3, 4, 6, 8 and the spacers 5, 7 may have a cross-section which is round, quadrangular or any other shape.

In a preferred embodiment, the storage system 1 is dimensioned such that each tier has a maximum length of 12000 mm and a width of maximum 2400 mm. The height of the storage system 1 and the elevator system 2 may vary according to the desired storage capacity. In a preferred embodiment, the storage system comprises three tiers which are disposed on top of each other, and which, together, have a maximum height of 2400 mm. The essentially horizontally disposed paternoster system may comprise at least one drive wheel (not shown) disposed at one end of each lateral frame and at least one adjustable wheel (not shown) disposed at the other end of each lateral frame. The drive wheel and/or the adjustable wheel may be configured with a plurality of serrations, so that at least one chain (not shown) having a plurality of chain links may be arranged around the wheels. The chain be configured as an endless chain or a chain having at least one connector link.

Alternatively, one or more steering wheels (not shown) and/or at least one slide rail (not shown) may be disposed between the drive wheel and the adjustable wheel. Hereby, it is possible to keep the chain sufficiently tight and prevent the chain from leaving the wheels prematurely.

The drive wheel and/or the adjustable wheel may be mounted on an end plate 9a, 9b, which may be secured to the lateral frame. Moreover, the drive wheel may be secured to at least one motor 10 via at least one optional gear system (not shown). The steering wheels may be mounted on at least one plate (not shown) secured to the lateral frame or be mounted directly on the upper rod 3 and/or the lower rod 4, respectively. The wheels may either be mounted on their respective shafts or on a through shaft which connects the wheel concerned with the corresponding wheel on the opposite side, or on a combination of both types of shafts. In a preferred embodiment, the drive wheels and the adjustable wheels are connected with a through shaft, while the steering wheels are connected with individual shafts.

The shaft on the adjustable wheel may be arranged in an elongated cut-out (not shown) in the end plate 9b, whereby the shaft may be displaced along the cut-out and be secured to the end plate 9b in a given position by means of fastening elements. Alternatively, the shaft on the adjustable wheel may be mounted on a bracket (not shown), which may be displaced along a plurality of elongated cut-outs in the end plate 9b and be secured to the end plate 9b via fastening elements. Alternatively, the drive wheel and its shaft may be arranged in an elongated cut-out (not shown) in the end plate 9a and be connected with a spring mechanism (not shown), which is secured to the end plate 9a. Hereby, the shaft on the drive wheel may be displaced and secured in a given position along the cut-out by means of the spring force. Hereby, the chain may be tightened manually or automatically to ensure an optimal operation.

The motor 10 and the optional gear system may be mounted directly on the drive wheel or be mounted on the end plate 9a in at least one optional slide rail (not show) or at least one elongated cut-out (not shown), so that the motor and the optional gear system may also be displaced when the chain is tightened.

The chains may be connected with a plurality of cradles 11 in which the objects are arranged. The cradle 11 may be mounted tiltably in a bearing (not shown), which may be arranged on a shaft (not shown), which may be connected with the chain. The bearing may be a ball bearing, a slide bearing or another tiltable bearing. The chain may be a roller chain, a chain made of technical plastics, a carrier chain, a conveyor chain, a bushing chain, a drive chain or another chain. In a preferred embodiment, a number of the chain bolts in the chains are replaced by a number of through shafts which are connected with the cradles 11, so that the shafts extend through the chain links on the one side, and that the bearing is arranged on the shaft near its free end. Alternatively, the shafts may be disposed between the chain bolts, so that the shafts may either be connected with the chain links on both sides of the chain or connected with the chain link on the one side of the chain. Hereby, it is possible to keep the cradles in an approximately horizontal position all the time.

In a preferred embodiment, the chain is constructed as a chain having a width of 1", where a plurality of through shafts are mounted along the entire chain with a suitable distance between the shafts. The shafts may have a diameter of 10 mm, on which a 10 mm ball bearing connected with the cradle 11 is arranged. The chains, the wheels and/or the shafts may be made of metal, technical plastics or another material suitable for the purpose.

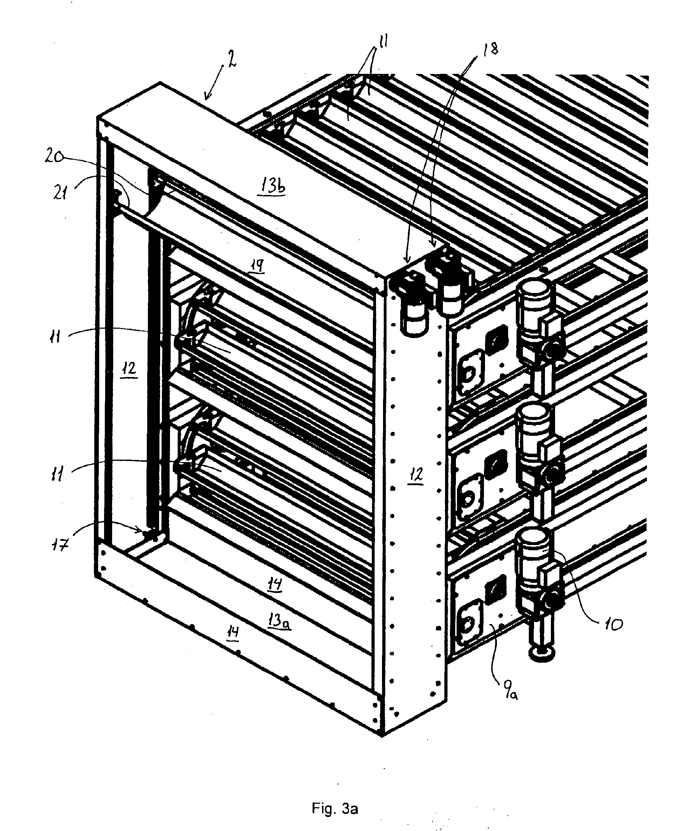

The cradle 11 may comprise two end plates (not shown) on which the bearings may be mounted. A bed in which the object is arranged, may be mounted between the end plates. The end plate may comprise a T-shaped plate of wood, metal, technical plastics or another suitable material, where the bearing may be disposed in the intersection (as indicated in figure 3a). The bed may be made of metal, technical plastics or another material suitable for the purpose. The bed may be configured as a single plate with optional cut-outs, and the plate may be configured as a half-cylinder or be bent once or several times, so that the plate obtains the desired shape. Alternatively, the bed may comprise two or more parallel plates, which may be arranged with a suitable distance between each other and angled relative to each other, so that, together, they form a half-cylinder. Alternatively, the bed may comprise two rods between which a cloth or two or more transverse pieces of cloth may be fixed. The cloth may be made of fabric, technical plastics or another material suitable for the purpose. In a preferred embodiment, the cradle 11 is dimensioned such that various types and sizes of objects may be arranged in it. In a particularly preferred embodiment, the cradle 11 comprises a plane bottom connected with two plane sides angled symmetrically about an axis of symmetry, which is perpendicular to the plane bottom.

Each tier 1A, 1B, 1C may comprise minimum 100 cradles, whereby it will be possible to store minimum 100 objects per tier. Hereby, a storage system with three tiers may have a storage capacity of 300 units. Alternatively, two or more storage systems may be established side by side with the same storage capacity or different storage capacities. Hereby, it will be possible to increase the storage capacity if a storage system does not have a sufficient storage capacity.

The motor 10, which may be connected with the drive wheel on each tier, may be connected with a controller (not shown), which is capable of controlling the movement of the cradles 11. The motor 10, e.g. a stepping motor, may be constructed so that it may move the cradles 11 forwards and/or rearwards in response to one or more control signals generated by the controller. The position and the speed of the cradle 11 may be controlled in an analog or a digital manner via the controller, e.g. by varying the frequency of the control signal or by means of a series of digital pulses. Hereby, it is possible to change the speed and the position of the cradle 11. The motor 10 on each tier may be equipped with a coder (not shown), which may be connected with the controller. Hereby, the controller may determine the speed and the position of the cradle 11.

One or more reflecting layers (not shown) may be arranged in the bottom of the cradle 11, and one or more photodetectors, photosensors, optical detectors or optical sensors (not shown) may be disposed across the cradle 11. The detector or the sensor may be connected with the controller and may record one or more reflected electromagnetic signals, such as reflected light, from the bottom of an empty cradle 11. One or more wireless identification units (not shown), such as an RFID chip, may be arranged on the cradle 11. One or more wireless reading units (not shown) disposed near each tier 1A, 1B, 1C may communicate with the identification units and may be connected with the controller. Alternatively, the reading units may also communicate with one or more identification units arranged on or in each object. Hereby, it is possible to record whether a cradle 11 is empty, and locate a given cradle 11 in the storage system.

Alternatively, the controller may perform a calibration process for each tier 1A, 1B, 1C, where the motor 10 moves all the cradles 11 past the detector or the sensor and/or the wireless reading unit. Hereby, it is possible to record the empty cradles and the full cradles. Alternatively, each tier 1A, 1B, 1C may comprise at least one calibration sensor connected with the controller, so that the controller may position a cradle 11 in a calibration position and adjust the position of the cradle 11. Hereby, it is possible to place the cradle 11 correctly relative to a seat 19 in the elevator system 2.

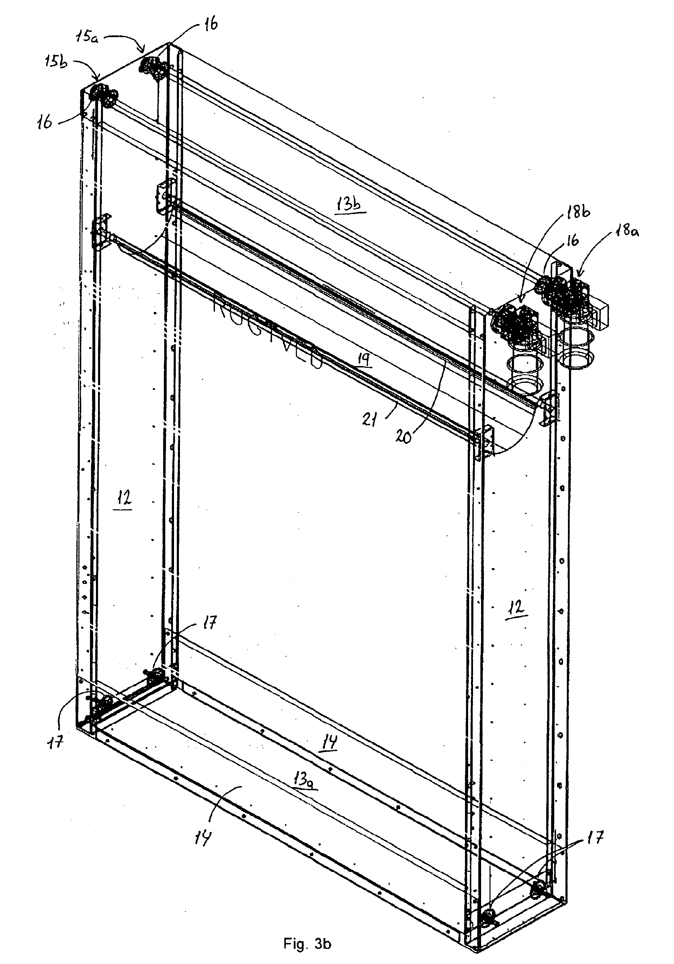

Figure 3a shows the elevator system 2 disposed at the end of the tiers 1A, 1B, 1C shown in figure 1. Figure 3b shows an embodiment of the elevator system 2 shown in figure 3a, which has been made transparent to show the structure and the position of the drive system 15. The elevator system 2 may comprise a frame structure on which two drive systems 15a, 15b may be mounted. The frame structure may comprise a bottom frame 13a, a top frame 13b and two lateral frames 12. One or more of the edges of the frames 12, 13 may be bent once or several times, so that the edge has an L-shape or J-shape, on which an adjoining frame may be secured using fastening elements. The front and/or the rear side of the elevator system 2 may be covered completely or partly by one or more plates 14. Alternatively, the frame structure may comprise a plurality of hollow or solid rods which are secured to each other, so that they form a skeleton structure (not shown) on which one or more plates (not shown) may be secured. The frame structure may be made of metal, technical plastics, wood or another material suitable for the purpose.

The drive systems 15 may comprise at least one drive wheel 16 and at least one steering wheel 17 disposed on their respective lateral frames 12, between which a belt drive (not shown) or a chain drive (not shown) may be mounted. Alternatively, one or more steering wheels or steering rails may be disposed between the drive wheel 16 and the steering wheel 17, The drive wheel 16 may be connected with at least one motor 18 and at least one optional gear system (not shown). The wheels 16, 17 on each lateral frame 12 may be connected with their respective shafts or with at least one through shaft or with a combination of both types of shafts. In a preferred embodiment, the drive wheels 16 are connected with a through shaft, and the steering wheels 17 are connected with individual shafts. The wheels 16, 17, the shafts, and/or the belts/chains in the drive systems 15 may be made of metal, technical plastics or another material suitable for the purpose.

A first drive system 15a may be disposed near the front of the elevator system 2, and a second drive system 15b may be disposed near the rear side of the elevator system 2. The drive systems 15a, 15b may be controlled individually or synchronously via a controller (not shown), which may be connected with the motors 18a, 18b and the optional gear system. Alternatively, the drive systems 15 may be connected with and be controlled by the controller which controls the storage system 1.

The seat 19 may be connected with the drive systems 15, in which one or more objects are arranged. The seat 19 may be connected with the first drive system 15a and the second drive system 15b via at least two rods 20, 21, on which the seat 19 may be secured. The rods 20, 21 may be connected directly with the belt or the chain in the drive systems 15 or via a bracket connected with the belt or the chain (as shown in figures 3a - b). In a preferred embodiment, the rods 20, 21 are connected with a bracket disposed in each belt drive or chain drive, said bracket being arranged on a steering rail. The seat 19 may be configured as a cloth, as shown in figure 3b, or as at least two transverse pieces of cloth fixed between the rods 20, 21 in the first drive system 15a and the second drive system 15b, respectively. Alternatively, the seat 19 may have the same configuration and structure (not shown) as the cradle 11, where at least one pin on the bracket connected with the drive or the belt may be disposed in an elongated hole of its own in the end plates of the cradle 11. By positioning the drive systems 15a, 15b in various positions, the seat 19 may tilt out toward the front or the rear side of the elevator system 2, respectively. Hereby, it is possible to arrange the object on a given tier or on the conveyor belt by means of the drive systems.

The seat 19 may be made of fabric, technical plastics or another material suitable for the purpose. In a preferred embodiment, the seat 19 is dimensioned such that various types and sizes of objects may be arranged in it.

The elevator system 2 may be disposed near the one end of the storage system 1 or near both ends of the storage system 1, as shown in figures 1 - 2. In a preferred embodiment, the elevator system 2 is used at the one end for loading the objects into the cradles 11, while the elevator system 2 at the other end is used for unloading the objects from the cradles 11. Alternatively, the elevator system 2 may be used for both purposes, whereby the objects may be loaded into and be unloaded from the storage system 1 from the same side.

A removing unit (not shown) may be disposed near the second drive system 15b or near the drive wheel and/or the adjustable wheel. The removing unit may be controlled by means of pneumatics or hydraulics from an external unit (not shown), which may be controlled by the controller connected with the drive systems 15 and/or the storage system 1. The removing unit may be disposed at both sides or at the one side of the elevator system 2 or the storage system 1. The removing unit may be constructed such that when the removing unit is activated, a movable element (not shown), such as a pawl, is brought Into contact with the end plate of the cradle 11 so that the cradle is tilted, whereby the object in the cradle 11 may roll into the seat 19. Alternatively, the cradle 11 may be moved forwards when the movable element has been brought into contact with the end plate of the cradle 11, whereby the cradle 11 is tilted, and the object may roll into the seat 19. The movable element is returned, when the object has rolled into the seat 19, or by deactivation of the removing unit. In a preferred embodiment, the removing unit is disposed near the drive wheel and/or the adjustable wheel at the one side of the storage system 1. Alternatively, the removing unit may be mounted in the centre of the rod 21 in the second drive system 15b or be mounted on the lateral frame 12 opposite each tier 1A, 1B, 1C. Alternatively, the movable element may be configured so that it may be brought into contact with the edge of the cradle 11 or an elevation (not shown), adapted for the purpose, on the lower side of the cradle 11 to tilt the cradle. Hereby, it is possible to move the object from the cradle 11 into the seat 19.

The motor 18a, 18b, such as a stepping motor, in each of the drive systems 15a, 15b may be provided with a coder (not shown), which may be connected with the controller which controls the drive systems 15. Hereby, the controller may determine the speed and the positions of the rods 20, 21 and thereby the seat 19 for each of the drive systems 15a, 15b, The position and the speed of the seat 19 may be controlled in an analog or a digital manner via the controller, e.g. by varying the frequency of the control signals or by means of a series of digital pulses. Hereby, it is possible to change the speed and the position of the seat.

One or more optional sensors or detectors may be disposed near the seat 19 and be connected with the controller which controls the drive systems 15. Hereby, it is possible to record whether an object is arranged in the seat 19, whereby the drive systems 15a, 15b may move the seat 19 to the tier 1A, 1B, 1C concerned and empty the seat 19 in one and the same process.

Alternatively, at least one calibration sensor (not shown) may be connected with the controller which controls the drive systems 15, and be disposed near the drive wheel 16 and/or the steering wheel 17 in the elevator system 2. By calibration, the motors 18a, 18b in the drive systems 15 may move the seat 19 to a calibration position, following which the controller may adjust the position of the rods 20, 21 in the drive systems 15a, 15b. Hereby, it is possible to position the seat 19 correctly relative to each tier in the storage system 1.

The controllers may be implemented in a central PLC unit (not shown), which controls the storage system 1 and the elevator systems 2. Alternatively, the controllers may be implemented in a central computer unit (not shown), where the processor controls the storage system 1 and the elevator systems 2 via an executable program stored in a memory. In an alternative embodiment, one or more local controllers (not shown) may control the tiers 1A, 1B, 1C and/or their respective elevator systems 2, where the local controllers may be controlled by the central controller. In a preferred embodiment, a central computer unit controls a plurality of local PLC units disposed on the tiers 1A, 1B, 1C and on the elevator system 2.

One or more of the controllers, such as the central controller, may exchange data with one or more external controllers or units, such as the controller controlling the washing and rolling process. An external scanner unit may be arranged in front of the storage system 1 and may recognize and record the type and the size of each individual object. These data are then sent to the controller in the storage system 1, where the controller may allocate a specific cradle 11 on a specific tier 1A, 1B, 1C to the object. Alternatively, one or more of the controllers may be connected with a graphic user interface on a screen (not shown), from which a user may adjust various parameters or operate the entire system. The data may be stored in at least one database (not shown), which may contain a list of the cradles 11 on each individual tier and of the cradle 11 in which each individual object is positioned. Hereby, it is possible to sort the objects in accordance with one or more predetermined criteria. In a preferred embodiment, the controller continuously updates the list in the database. Hereby, it is possible to update the status of the cradle 11 concerned in step with the filling or the emptying of the cradle 11.

The objects may be moved to and away from the elevator system 2 via one or more external transport systems (not shown), which may comprise one or more conveyor belts, and which may be controlled automatically or manually. Alternatively, the transport systems may be connected with the controller which controls the storage system 1 and/or the elevator system 2.

When an object is to be loaded into the storage system 1, the controller sends at least one control signal to the drive systems 15a, 15b, which move the seat 19 to a first loading position opposite a first external transport system. In a preferred embodiment, the rods 20, 21 are arranged opposite each other, whereby the seat 19 is positioned in a horizontal loading position. The first external transport system then moves the object into the seat 19. On the basis of the data received externally, the controller determines on which tier the object is to be positioned, and then generates at least one control signal. The drive systems 15a, 15b move the seat 19 at the same speed to a first unloading position opposite the tier concerned according to the control signals received. The motor 10 on the tier concerned receives at least one control signal from the controller, following which the motor 10 moves an empty cradle 11 to a second loading position opposite the seat 19 in the elevator system 2. Then, the first drive system 15a moves up to a predetermined position above the second drive system 15b, whereby the seat 19 is tilted and the object is moved into the empty cradle 11. In a preferred embodiment, the cloth is tightened between the rods 20, 21 when the rods 20, 21 are positioned in their respective positions, whereby the object is moved into the cradle 11 or onto an external transport system.

When an object is to be unloaded from the storage system 1, the controller receives external instructions either via the graphic user interface or via an external unit concerning which object or objects on which tier or tiers is/are to be unloaded. According to the instructions, the controller sends at least one control signal to the motor 10 on the tier concerned, which moves the desired cradle 11 to a second unloading position opposite the seat 19 in the elevator system 2. The drive systems 15a, 15b receive at least one control signal from the controller, following which the seat 19 is moved to the first unloading position opposite the tier concerned. The removing unit then receives a control signal from the controller and activates the movable element, following which the cradle 11 is moved forwards, and the object is moved into the seat 19. The movable element is returned, and the cradle 11 returns to its horizontal position. Then, the drive systems 15a, 15b move the seat 19 at the same speed to the first loading position. Then, the second drive system 15b moves up to the predetermined position above the first drive system 15a, whereby the seat is tilted and the object is moved onto the first external transport system or a second external transport system. In a preferred embodiment, the objects are loaded into the storage system 1 at the one end and are unloaded from the storage system 1 at the other end via their respective elevator systems 2.

In a preferred embodiment, the storage system 1 is constructed so that the second loading position and the second unloading position of the cradles 11 are the same at both ends of the storage system 1.

The storage system 1, the elevator system 2 and optionally the external transport system may be controlled individually via the controller. Hereby, it is possible to execute several processes at the same time. If an elevator system 2 is arranged at both ends of the storage system 1, the objects may be loaded and unloaded at the same time. If an object is to be loaded into the same tier from which an object is to be unloaded, this may take place at the same time, if the cradle 11 in the loading position is empty, while the cradle 11 in the unloading position is full. If not, then the controller may make a priority as to which process is to be performed first. Hereby, it is possible to automatize the storage control completely or partly.

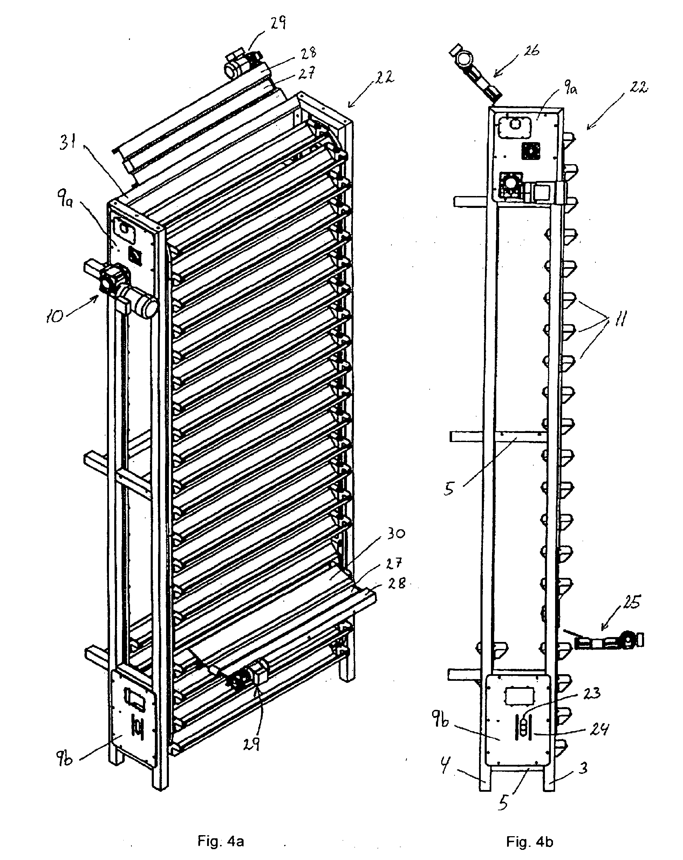

Figure 4 shows a storage system which is not part of the invention, where the storage system 22 comprises at least one tier having an essentially vertical paternoster system. The tiers in the storage system 22 may have same structure as the tiers 1A, 1B, 1C shown in figures 1 -2. The individual parts of the storage system 22 have the same numbers as the storage system 1 shown in figures 1 - 2. The storage systems 1, 22 shown in figures 1 and 4 just show some of the cradles 11. This provides a differently compact storage system of high storage capacity which occupies as little space as possible, and where the cradles are kept in an approximately horizontal position all the time.

As shown in figure 4, the drive wheel, the motor 10 and the optional gear system may be connected with an end plate 9a disposed near the one end of the rods 3, 4. The end plate 9b connected with the adjustable wheel and/or one of the spacers 5 may be disposed at a given distance from the opposite end of the rods 3, 4, as shown in the figure. The shaft of the adjustable wheel may be arranged in an elongated cut-out 23 on the end plate 9b, whereby the shaft may be displaced along the cut-out 23 and be secured to the end plate 9b in a given position using fastening elements. Alternatively, the shaft of the adjustable wheel may be mounted on a bracket (not shown), which may be displaced along a plurality of elongated cut-outs 24 in the end plate 9b and be secured to the end plate 9b using fastening elements.

One or more loading systems 25, 26 may be disposed along the one side or both sides of the storage system 22. The objects are sorted and arranged in the storage system 22 via the loading system 25, 26. The loading system 25, 26 may comprise at least one advancing unit 27 disposed in a through slot or depression on a first plate 28. The advancing unit 27 may be constructed as a roller belt or a conveyor belt comprising at least one cylindrical roller or a wheel arranged in at least one bearing mounted on at least one shaft, which may be connected with the plate 28. Alternatively, a flexible band, a belt or a chain made of rubber, plastics, technical plastics, metal or another suitable material may be arranged around the two outermost rollers or wheels. Alternatively, the advancing unit 27 may comprise at least one drive wheel connected with at least one motor 29 and at least one optional gear system (not shown) mounted on the plate 28. The sides of the plate 28 may be L-shaped or J-shaped, and the edge of the plate 28 may be bent inwards toward the depression or the slot, so that the motor 29 and/or the shafts in the advancing unit 27 may be connected with the edges. Hereby, it is possible to move an object from the external transport system into the loading system, or vice versa.

At least one movable second plate 30 may be connected with the one side of the plate 28. The plate 30 is capable of rotating about an axis of rotation in parallel with the edge of the plate 28 and may be connected with a hydraulic or pneumatic unit (not shown), which may be controlled by a local or central controller, such as the controller controlling the storage system 22. The loading system 25, 26 may be disposed in parallel with the storage system 22, so that the movable plate 30 faces inwards toward the cradles 11. In a preferred embodiment, at least one loading system 25 is disposed on the one side, while at least one second loading system 26 is disposed on the opposite side, preferably near the top of the storage system 22.

When the hydraulic or pneumatic unit is activated, the movable plate 30 in the loading system 25 is brought into contact with the edge of the cradle 11, so that the cradle 11 is tilted, whereby the object is moved into the loading system 25. Alternatively, upon activation, the movable plate 30 is rotated inwards over the edge of the cradle 11, following which the cradle 11 is moved forwards, so that its edge is brought into contact with the plate 30, so that the cradle 11 is tilted. Hereby, the object is moved into the loading system 25 and further out onto a third external transport system (not shown) by means of the advancing unit 27. Then, the movable plate 30 returns to its starting position, and the hydraulic or pneumatic unit is deactivated.

The movable plate 30 in the loading system 26 may be secured directly to the lateral frame in the storage system 22 or via a plate or rod 31, whereby the loading system 26 may rotate about the axis of rotation. The object is moved from a fourth external transport system (not shown) into the loading system 26 by means of the advancing unit 27, and an empty cradle 11 is positioned opposite the loading system 26. Then, the hydraulic or pneumatic unit is activated, and the loading system 26 is tilted inwards toward the cradle 11, whereby the object is moved into the cradle 11. Then, the loading system 26 returns to its horizontal starting position, and the hydraulic or pneumatic unit is deactivated.

In an alternative embodiment, one or more storage systems 22 may be disposed in extension of each other. The loading systems 25 may be interconnected via the third external transport system. The loading systems 26 may be interconnected via the fourth external transport system. The storage systems 22 ad/or the loading systems 25, 26 may be controlled by one or more local controllers and/or a central controller.

One or more storage systems 1, 22 may be disposed side by side, where objects with identification units are stored in the storage system 1, and objects without identification units are stored in the storage system 22. One or more elevator systems 2 and one or more loading systems 25, 26 may be disposed opposite each storage system 1, 22 and may be interconnected via one or more external transport systems. The individual systems 1, 2, 22, 25, 26 may be controlled by their respective controllers and/or be controlled by a central controller, such as a central computer unit. Hereby, it is possible to sort, store and remove up to 450 objects or more per hour.

Each of the mentioned alternative embodiments may be combined with the structure in the preferred embodiment.

## Claims

1. A system for sorting and storing objects, such as mats, comprising two or more storage systems (1) disposed on top of each other and interconnected via one or more spacers (7), each of which is intended to store the objects and comprises at least one drive wheel connected with at least one motor, at least one adjustable wheel and at least one chain disposed on the drive wheel and the adjustable wheel, are disposed in the same horizontal plane, at least one system (2) which is intended to sort the objects, and which comprises at least one movable part connected with at least one motor and intended to load the objects into or unload them from the storage systems, and at least one controller connected with the storage systems (1) and the sorting system (2), the storage systems (1) comprising at least one cradle (11) which is connected with a chain disposed on each side of the cradle (11), **characterized in that** said cradle (11) is tiltable about a shaft which is connected with the chain, and which is arranged in a bearing on the end plate of the cradle (11) and **in that** at least one vertical elevator system (2) is disposed at the end of the storage systems (1), and the movable part in the elevator system (2) comprises a seat (19) in which the object is arranged, the elevator system (2) comprising two drive systems (15a, 15b), both of which comprise at least one drive wheel (16) connected with at least one motor, at least one steering wheel (17) and a chain disposed around the wheels (16, 17) and where the seat (19) is connected with the first drive system (15a) and the second drive system (15b), respectively, whereby the seat (19) may be tilted by positioning the one drive system in a position which is higher than the position of the other drive system.

2. A system according to claim 1, **characterized in that** the storage system (1) comprises at least one removing unit having a movable element, such as a pawl, which may be brought into contact with at least the one end plate of the cradle (11), and that the cradle (11) is tilted by moving the cradle (11) forwards.

3. A system according to any one of claims 1 or 2, **characterized in that** the storage system (1) comprises at least one sensor or detector disposed above the cradle (11) and intended to record one or more reflected signals, such as reflected light, from a reflecting material disposed at the bottom of the cradle (11), or at least one wireless reading unit disposed near the cradles (11) and intended to communicate with at least one identification unit disposed on the cradle (11).

4. Use of a system according to any one of claims 1 - 3 for sorting and storing objects, such as mats.

5. Use according to claim 4, **characterized in that** the storage system (1) comprises a removing unit having a movable element, such as a pawl, which is brought into contact with at least the one end plate of the cradle (11), said cradle (11) being tilted by moving the cradle (11) forwards.

6. Use according to any one of claims 4 or 5, **characterized in that** the controller records whether a cradle (11) is empty or not by means of at least one sensor or detector disposed above the cradles (11), or that the controller records the positions of the cradles (11) by means of at least one wireless reading unit, which is disposed near the cradles (11) and communicates with at least one wireless identification unit on the cradle (11).

## Patentansprüche

1. System zum Sortieren und Lagern von Objekten, wie z.B. Matten, aufweisend zwei oder mehrer Lagersysteme (1), die aufeinander angeordnet sind und über einen oder mehrere Abstandshalter (7) miteinander verbunden sind, von denen jedes dazu vorgesehen ist, um die Objekte zu lagern, und aufweist wenigstens ein Antriebsrad, das mit wenigstens einem Motor verbunden ist, wenigstens ein einstellbares Rad und wenigstens eine Kette, die an dem Antriebsrad und dem einstellbaren Rad angeordnet ist, sind in der gleichen horizontalen Ebene angeordnet, wenigstens ein System (2), welches dazu vorgesehen ist, um die Objekte zu sortieren, und welches aufweist wenigstens einen bewegbaren Teil, der mit wenigstens einem Motor verbunden ist und der dazu vorgesehen ist, um die Objekte in die Lagersysteme einzuladen oder sie aus diesen auszuladen, und wenigstens eine Steuervorrichtung, die mit den Lagersystemen (1) und dem Sortiersystem (2) verbunden ist, wobei die Lagersysteme (1) aufweisen wenigstens einen Wiegeträger (11), der mit einer Kette verbunden ist, die an jeder Seite des Wiegeträgers (11) angeordnet ist, **gekennzeichnet dadurch, dass** der Wiegeträger (11) um einen Schaft kippbar ist, der mit der Kette verbunden ist und der in einem Lager an der Endplatte des Wiegeträgers (11) angeordnet ist, und dadurch, dass wenigstens ein Vertikalaufzugsystem (2) an dem Ende der Lagersysteme (1) angeordnet ist, wobei der bewegbare Teil in dem Aufzugsystem (2) eine Aufnahme (19) aufweist, in welcher das Objekt angeordnet ist, wobei das Aufzugsystem (2) zwei Antriebssysteme (15a, 15b) aufweist, von denen beide wenigstens ein Antriebsrad (16), das mit wenigstens einem Motor verbunden ist, und wenigstens ein Steuerrad (17) und eine Kette aufweisen, die um die Räder (16, 17) herum angeordnet ist, und wobei die Aufnahme (19) mit dem ersten Antriebssystem (15a) bzw. dem zweiten Antriebssystem (15b) verbunden ist, wodurch die Aufnahme (19) gekippt werden kann durch Positionieren des einen Antriebssystems in einer Position, die höher ist als die Position des anderen Antriebssystems.

2. System gemäß Anspruch 1, **dadurch gekennzeichnet, dass** das Lagersystem (1) aufweist wenigstens eine Entfernen-Einheit, welche ein bewegbares Element hat, wie z.B. eine Klaue, das in Kontakt mit wenigstens der einen Endplatte des Wiegeträgers (11) gebracht werden kann, und dass der Wiegeträger (11) gekippt wird durch Vorwärtsbewegen des Wiegeträgers (11).

3. System gemäß irgendeinem der Ansprüche 1 oder 2, **dadurch gekennzeichnet, dass** das Lagersystem (1) aufweist wenigstens einen Sensor oder Detektor, der über dem Wiegeträger (11) angeordnet ist und vorgesehen ist, um eins oder mehrere reflektierte Signale zu erfassen, wie z.B. reflektiertes Licht, von einem reflektierenden Material, das am Boden des Wiegeträgers (11) angeordnet ist, oder wenigstens eine Drahtlos-Leseeinheit, die nahe der Wiegeträger (11) angeordnet ist und vorgesehen ist, um mit wenigstens einer Identifikationseinheit zu kommunizieren, die an der Wiegeeinheit (11) angeordnet ist.

4. Verwendung eines Systems gemäß einem der Ansprüche 1 - 3 zum Sortieren und Lagern von Objekten, wie z.B. Matten.

5. Verwendung gemäß Anspruch 4, **dadurch gekennzeichnet, dass** das Lagersystem (1) eine Entfernen-Einheit aufweist, die ein bewegbares Element hat, wie z.B. eine Klaue, das in Kontakt mit wenigstens der einen Endplatte des Wiegeträgers (11) gebracht wird, wobei der Wiegeträger (11) gekippt wird durch Vorwärtsbewegen des Wiegeträgers (11).

6. Verwendung gemäß irgendeinem der Ansprüche 4 oder 5, **dadurch gekennzeichnet, dass** die Steuervorrichtung erfasst, ob ein Wiegeträger (11) leer ist oder nicht mittels wenigstens eines Sensors oder Detektors, der über den Wiegeträgern (11) angeordnet ist, oder dass die Steuervorrichtung die Positionen der Wiegeträger (11) erfasst mittels wenigstens einer Drahtlos-Leseeinheit, die nahe den Wiegeträgern (11) angeordnet ist und die mit wenigstens einer Drahtlos-Identifikationseinheit am Wiegeträger (11) kommuniziert.

## Revendications

1. Système pour trier et stocker des objets, tels que des tapis, comprenant deux ou plus de deux systèmes de stockage (1) disposés les uns au-dessus des autres et interconnectés par un ou plusieurs organes d'espacement (7), dont chacun est destiné à stocker les objets et comprend au moins une roue d'entraînement reliée à au moins un moteur, au moins une roue réglable et au moins une chaîne disposée sur la roue d'entraînement et la roue réglable, disposées dans le même plan horizontal, au moins un système (2) qui est destiné à trier les objets, et qui comprend au moins une partie mobile reliée à au moins un moteur et destinée à charger les objets dans les systèmes de stockage ou à les décharger de ceux-ci, et au moins un contrôleur relié aux systèmes de stockage (1) et au système de tri (2), les systèmes de stockage (1) comprenant au moins un berceau (11) qui est relié à une chaîne disposée de chaque côté du berceau (11), **caractérisé en ce que** ledit berceau (11) peut basculer autour d'un arbre qui est relié à la chaîne, et qui est agencé dans un palier sur une plaque d'extrémité du berceau (11) et **en ce qu'**au moins un système élévateur vertical (2) est disposé à l'extrémité des systèmes de stockage (1), et la partie mobile dans le système élévateur (2) comprend un siège (19) dans lequel l'objet est agencé, le système élévateur (2) comprenant deux systèmes d'entraînement (15a, 15b) comprenant tous deux au moins une roue d'entraînement (16) reliée à au moins un moteur, au moins une roue de direction (17) et une chaîne disposée autour des roues (16, 17) et où le siège (19) est relié respectivement au premier système d'entraînement (15a) et au second système d'entraînement (15b), en sorte que le siège (19) peut être basculé en positionnant un système d'entraînement dans une position qui est plus haute que la position de l'autre système entraînement.

2. Système selon la revendication 1, **caractérisé en ce que** le système de stockage (1) comprend au moins une unité d'enlèvement ayant un élément mobile, tel qu'un cliquet, qui peut être mis en contact avec au moins la plaque d'extrémité du berceau (11), et que le berceau (11) est basculé en déplaçant le berceau (11) vers l'avant.

3. Système selon l'une quelconque des revendications 1 ou 2, **caractérisé en ce que** le système de stockage (1) comprend au moins un capteur ou détecteur disposé au-dessus du berceau (11) et destiné à enregistrer un ou plusieurs signaux réfléchis, tels qu'une lumière réfléchie, à partir d'un matériau réfléchissant disposé sur le fond du berceau (11), ou au moins une unité de lecture sans fil disposée près des berceaux (11) et destinée à communiquer avec au moins une unité d'identification disposée sur le berceau (11).

4. Utilisation d'un système selon l'une quelconque des revendications 1 à 3 pour trier et stocker des objets, tel que des tapis.

5. Utilisation selon la revendication 4, **caractérisée en ce que** le système de stockage (1) comprend une unité d'enlèvement ayant un élément mobile, tel qu'un cliquet, qui est mis en contact avec au moins la plaque d'extrémité du berceau (11), ledit berceau (11) étant basculé en déplaçant le berceau (11) vers l'avant.

6. Utilisation selon l'une quelconque des revendications 4 ou 5, **caractérisée en ce que** le contrôleur enregistre si un berceau (11) est vide ou non au moyen d'au moins un capteur ou détecteur disposé au-dessus des berceaux (11), ou que le contrôleur enregistre les positions des berceaux (11) au moyen d'au moins une unité de lecture sans fil, qui est disposée près des berceaux (11) et communique avec au moins une unité d'identification sans fil sur le berceau (11).
